# EUROPÄISCHE PATENTANMELDUNG

(11) **EP 3 650 222 A1**
(43) Veröffentlichungstag der Anmeldung: **13.05.2020**
(21) Anmeldenummer: 19207709.7
(22) Anmeldetag: 07.11.2019
(51) Int. Cl.: B33Y 50/02, B22F 3/105, B29C 64/40, B33Y 10/00, B33Y 50/00

(54) **ADDITIVES HERSTELLUNGSVERFAHREN, INSBESONDERE PULVERBETTBASIERTES SELEKTIVES LASERSTRAHLSCHMELZEN**

(30) Priorität: 07.11.2018 DE 102018127820
(71) Anmelder: Additive Works GmbH, 28357 Bremen (DE)
(72) Erfinder: Schlasche, John Wilfried, 28205 Bremen (DE); Xu, Hongxiao, 28205 Bremen (DE)
(74) Vertreter: Eisenführ Speiser

(57) **Zusammenfassung**

Die Erfindung betrifft ein additives Herstellungsverfahren zum Herstellen eines dreidimensionalen metallischen Bauteils aus mehreren Bauteilschichten, wobei das Bauteil als Teil eines Fertigungskörpers (100), umfassend einen Grundkörper (110), und eine Stützstruktur (120) zum Stützen und Fixieren des Grundkörpers (110), hergestellt wird, mit den Schritten:
A) Definieren (A) einer dreidimensionalen Bauteilgeometrie des herzustellenden Bauteils,
B) Berechnen (B, 1210, 1220) mindestens eines ersten Herstellungsparameters f_{1...n}, der den Aufbauprozess des Grundkörpers (110) definiert und mindestens eines zweiten Herstellungsparameters h_{1...n}, der den Aufbauprozess der Stützstruktur (120) definiert, wobei ein Parametersatz P bereitgestellt wird (1500, 1600, 1700, 1800, 1900, 2000) und der Herstellungsparameter h_{1...n} als Funktion des Parametersatzes P, berechnet wird,
C) Herstellen (C, 1310, 1320) des Fertigungskörpers (100) durch einen Aufbauprozess, umfassend mehrfaches Hinzufügen von Ausgangsmaterial und formgebendes Verfestigen
wobei der Parametersatz P mindestens einen Parameter p_{1...n} zur Charakterisierung der Stützstruktur (120) und/oder mindestens einen Parameter q_{1...n} zur Charakterisierung des Aufbauprozesses umfasst,
wobei der Parametersatz P als Funktion der Bauteilgeometrie, bzw. der Grundkörpergeometrie, und mindestens einer mechanischen und/oder eine geometrischen Kenngröße K₁, K₂ bereitgestellt wird,
welche an mindestens einem geometrisch vereinfachten und insbesondere standardisierten Muster-Fertigungskörper (200, 201, 202) erfasst wird.

## Beschreibung

Die Erfindung betrifft ein Additives Herstellungsverfahren, insbesondere pulverbettbasiertes selektives Laserstrahlschmelzen, zum Herstellen eines dreidimensionalen metallischen Bauteils aus mehreren Bauteilschichten, wobei das Bauteil als Teil eines Fertigungskörpers, umfassend einen Grundkörper, welcher das herzustellende Bauteil spezifiziert, und eine Stützstruktur zum Stützen und Fixieren des Grundkörpers, hergestellt wird, mit den Schritten:
A) Definieren einer dreidimensionalen Bauteilgeometrie des herzustellenden Bauteils, B) Herstellen des Fertigungskörpers durch einen Aufbauprozess, umfassend mehrfaches Hinzufügen von Ausgangsmaterial und formgebendes Verfestigen, vorzugsweise durch jeweiliges selektives Schmelzen und/oder Sintern des Ausgangsmaterials,
wobei der Aufbauprozess der Stützstruktur durch mindestens einen Herstellungsparameter bestimmt wird, welcher durch eine Berechnung, insbesondere eine Finite-Elemente-Methode, mittels eines Parametersatzes P bereitgestellt wird.

Bei additiven Herstellungsverfahren zur Herstellung metallischer Bauteile, auch als generative Herstellungsverfahren bezeichnet, handelt es sich um Verfahren, bei denen auf Basis von digitalen Konstruktionsdaten und Herstellungsparametern durch sequentielles Hinzufügen von Material ein Bauteil entsteht. In der Veröffentlichung von Kohlhuber, M. et al. Additive Manufacturing, In: Series on Science-Based Policy Advice, 2017. acatech - National Academy of Science and Engineering, German National Academy of Sciences Leopoldina, Union of the German Academies of Sciences and Humanities (Eds.) München, Seiten 12-24, wird ein additiver Herstellungsprozess auf Basis solcher von digitalen Konstruktionsdaten beschrieben.

Das Ausgangsmaterial kann dabei beispielsweise als pulverförmiges Material bereitgestellt werden, durch lokale Energieeinbringung in einen schmelzförmigen Zustand überführt, mit der darunterliegenden Schicht verbunden und wieder verfestigt werden. Beispiele für solche Verfahren sind das pulverbettbasierte selektive Laserstrahlschmelzen, bei dem die Energie mittels mindestens eines Strahls, wie zum Beispiel eines Laserstrahls oder eines Elektronenstrahls in ein Pulverbett eingebracht wird, oder das Auftragsschweißen, bei dem pulverförmiges Material aufgeschmolzen und im schmelzförmigen Zustand aufgetragen wird. Das Bauteil kann dabei auf einen Grundkörper oder eine Basisplatte schichtweise aufgebaut werden und mit dieser eine feste Verbindung eingehen.

Während des additiven Herstellungsverfahrens entstehen durch den Aufbauprozess und insbesondere die lokale Energieeinbringung sowie die Volumenänderungen, bedingt durch die Phasenänderungen des Ausgangsmaterials, thermisch induzierte Eigenspannungen, die zum Verzug des Bauteils oder einzelner Bauteilbereichen führen können.

Zur Reduzierung des Verzugs des Bauteils werden sogenannte Stützstrukturen eingesetzt. Das Bauteil kann dabei derart konstruiert sein, dass die Stützstrukturen strukturintegrer Bestandteil des fertigen Bauteils sind oder nach dem Aufbauprozess zu entfernen sind. Die Stützstruktur führt dabei im Prozess einen Teil der eingebrachten Wärme beispielsweise in die Basisplatte ab und verbindet den Grundkörper derart mit der Basisplatte, dass der Verzug reduziert wird. Folglich wirken durch die Eigenspannungen hohe Kräfte durch den Grundkörper auf die Stützstruktur.

Ein Verfahren zur Bestimmung solcher Eigenspannungen wird in Keller, N. Verzugsminimierung bei selektiven Laserschmelzverfahren durch Multi-Skalen-Simulation. Dissertation [online], März 2017*, [Zugriff am 16.10.2018]* Staats- und Universitätsbibliothek Bremen: http://nbn-resolving.de/urn:nbn:de:gbv:46-00105808-15 sowie in Escobar de Obaldia, E. et al. Industrial 3D Printing Helps Develop A Better Race Car. In: MSC Software Magazine, Volume VII, MSC Software Corporation, Summer 2017, Seite 27 beschrieben.

Die geometrische und strukturelle Gestaltung einer solchen Stützstruktur wird durch die Herstellungsparameter definiert. Diese werden zumeist geschätzt und iterativ angepasst, durch Berechnung bestimmt oder in einem Design Programm definiert oder auf Grundlage von geometrischen Bedingungen automatisch erstellt.

Das Schätzen solcher Parameter und die iterative Anpassung führen zumeist zu sehr langen Prozesszeiten und einer Überdimensionierung der Stützstrukturen, welche aus ökonomischer Sicht zu vermeiden ist, da sie erhöhten Materialaufwand erfordert und die Prozesszeiten des Aufbauprozesses sowie die Nachbearbeitungszeit zum Entfernen der Stützstrukturen steigt.

Für die Berechnung von Parametersätzen auf Basis derer die Herstellungsparameter für solche Stützstrukturen bestimmt werden, sind Kenntnisse des Werkstoffes und des Prozesses erforderlich, um Annahmen hinsichtlich der erzielbaren Eigenschaften des Bauteils bzw. des Fertigungskörpers treffen zu können. Zur Erlangung solcher Erkenntnisse über den Werkstoff ist u.a. die Charakterisierung der Ausgangsmaterialien erforderlich, welche, insbesondere bei der Verwendung pulverförmiger Ausgangsmaterialien, sehr kostenintensiv ist. Ferner besteht eine große Herausforderung in der Vorhersage der Werkstoffeigenschaften des fertigen Bauteils, ausgehend von den Ausgangsmaterialien. Der Werkstoff und dadurch bedingt die Eigenschaften des Bauteils bzw. eines Fertigungskörpers entstehen erst während des Aufbauprozesses durch das formgebende Verfestigen des Werkstoffes, wodurch eine Vorhersage erschwert wird. Ferner unterscheiden sich hierbei die mechanischen Eigenschaften des Werkstoffes innerhalb des Fertigungskörpers in Abhängigkeit der Geometrie. Die Geometrie beeinflusst dabei maßgeblich das Abkühlverhalten des Werkstoffes durch den Wärmeübergang und damit das entstehende Gefüge bzw. die Phasenübergänge. Die Eigenschaften des Werkstoffes unterliegen darüber hinaus starken fertigungsbedingten Schwankungen.

Zur Berechnung ist damit eine genaue Bestimmung der Geometrie notwendig. Insbesondere bei pulverbasierten additiven Verfahren unterliegt die Oberfläche und damit die Geometrie jedoch starken fertigungsbedingten Schwankungen. Die Oberfläche der Bauteile ist dabei zumeist derart unregelmäßig ausgestaltet, dass die tatsächliche Geometrie stark von einer idealisierten rechnerisch bestimmten Geometrie abweicht und nur anhand eines Schliffbildes zuverlässig ermittelt werden kann.

Ferner ist die Stützstruktur meist stark durch die prozessbedingten Eigenspannungen vorbelastet, was direkte Messungen von mechanischen Eigenschaften durch klassische Prüfverfahren erschwert. Eine Reduktion dieser durch den Aufbauprozess induzierten Eigenspannungen, wie beispielweise durch eine anschließende Wärmebehandlung beeinflusst wiederum selbst das Gefüge damit die mechanischen Eigenschaften, sodass das Messergebnis weiterhin unzutreffend wäre.

Die Werkstoffeigenschaften müssen daher zumeist durch Annahmen und grobe Näherung des tatsächlichen Werkstoffzustandes bestimmt werden. Die Stützstrukturen, welche auf Basis derart bestimmter Herstellungsparameter gefertigt werden, versagen zumeist schon während der Herstellung der Bauteile. Aus diesem Grund werden Stützstrukturen häufig überdimensioniert oder iterativ in kostspieligen Versuchsreihen angepasst. Hierdurch ist ein hoher Materialeinsatz und längere Prozesszeiten bedingt. Eine anschließende Entfernung der überdimensionierten Stützstrukturen führt zu einem erheblichen Nachbearbeitungsbedarf und erhöht weiter die Prozesszeiten.

Der Erfindung liegt daher die Aufgabe zugrunde, zumindest eines der oben genannten Probleme zu adressieren. Insbesondere soll eine Lösung vorgeschlagen werden, welche bei gemindertem oder gleichbleibendem Bauteilverzug den Materialeinsatz und die Prozesszeiten bei additiven Herstellungsverfahren reduziert.

Die Erfindung löst die zugrundeliegende Aufgabe dadurch, dass der Parametersatz P mindestens einen Parameter p zur Charakterisierung der Stützstruktur und/oder mindestens einen Parameter q zur Charakterisierung des Aufbauprozesses umfasst, wobei der Parametersatz P als Funktion der Bauteilgeometrie, bzw. der Grundkörpergeometrie, und mindestens einer mechanischen und/oder geometrischen Kenngröße K bereitgestellt wird, welche an mindestens einem geometrisch vereinfachten und insbesondere standardisierten Muster-Fertigungskörper erfasst wird.

Der Parametersatz P ist somit geometrieabhängig und wird durch eine Rechenoperation bereitgestellt. Diese Rechenoperation umfasst bevorzugt eine Finite-Elemente-Methode. Die Berechnung des Parametersatzes P kann dabei bevorzugt von einer Software, welche auf einem Datenträger bereitgestellt wird, durchgeführt werden. Es ist dabei sowohl im Sinne der Erfindung, den Schritt der Berechnung des Parametersatzes P in einer separaten Berechnung mittels einer separaten Software durchzuführen, als auch als Schritt bei der Berechnung der Herstellungsparameter selbst, mittels einer Software, welche beide Schritte zur Berechnung und/oder die gesamte Aufbausimulation durchführt. Die Bereitgestellung der Kenngröße K kann bevorzugt mittels einer Benutzerschnittstelle erfolgen.

Somit kann bereits durch einmaliges Erfassen die Kenngröße K bereitgestellt werden und für eine Mehrzahl von Parametersätzen P verwendet werden. Die Berechnung des geometrieabhängigen Parametersatzes P erfordert ferner neben der Kenngröße K eine spezifische Bauteilgeometrie. Für beliebige Bauteile mit abweichenden Geometrien kann somit nach einmaliger Erfassung der Kenngröße K, bei gleichbleibendem Ausgangsmaterial und gleichbleibender Vorrichtung zur additiven Herstellung, jeweils ein bauteilspezifischer Parametersatz P bereitgestellt werden. Es wird demnach ein kalibrierter Parametersatz als Funktion der Bauteilgeometrie und einer oder mehrerer Kenngrößen K bereitgestellt, welcher zur Berechnung der Herstellungsparameter verwendet werden.

Als Bauteilgeometrie wird hier die idealisierte Zielgeometrie des fertigen Bauteils, also insbesondere des Grundkörpers verstanden. Die Kenngröße K bezeichnet dabei einen durch Messung bereitgestellten Modellparameter, welche den mechanischen oder geometrischen Zustand des Fertigungskörpers lokal charakterisiert, jedoch keinen spezifischen mechanischen Kennwert, wie beispielsweise die Zugfestigkeit beschreibt.

Die Kenngröße K charakterisiert den Fertigungskörper somit beispielsweise durch eine Kraft, welche erfasst wird und auf den Fertigungskörper wirkt und ermöglicht somit eine Korrelation zwischen der erzielbaren Traglast und der durch die Herstellungsparameter definierten Geometrie. Dies geschieht ohne exakte Kenntnis der Fläche, insbesondere der Querschnittfläche, auf die diese Kraft wirkt, und/oder die lokal verteilten und stark geometrieabhängigen Eigenspannungen. Es kann somit indirekt und zumeist nur näherungsweise einen Rückschluss auf die Zugfestigkeit gezogen werden.

Die Kenngröße K erlauben ohne eine Bestimmung der spezifischen Werkstoffeigenschaften und/oder ohne eine direkte Erfassung Prozesseinflüsse, indirekt Rückschlüsse auf den Prozess zu treffen und eine Korrelation zu den Werkstoffeigenschaften und die damit einhergehende Wechselwirkung zwischen Grundkörper und Stützstruktur. Die Stützstrukturen werden somit hinreichend charakterisiert, um einen Parametersatz P bereitzustellen.

So wird somit nach Art eines "Reverse-Engineering-Prozesses" eine Kenngröße am Muster-Fertigungskörper erfasst, welche Rückschlüsse auf die mechanischen oder geometrischen Eigenschaften des fertigen Bauteils und insbesondere der Stützstruktur ermöglicht.

Die Erfindung macht sich ferner die Erkenntnis zu Nutze, dass nicht die absolute Bestimmung der Eigenschaften des Werkstoffes für die Bereitstellung des Parametersatzes P zur Berechnung der Herstellungsparameter der Stützstruktur notwendig sind, sondern eine relative Bestimmung, also im Wesentlichen die Wechselwirkung zwischen Stützstruktur und Grundkörper eine hinreichende Charakterisierung ermöglichen. Wird auf Basis der Kenngröße K, also eines durch Messung bereitgestellten Modellparameters, beispielsweise eine Eigenspannung als Parameter p des Parametersatzes P berechnet, und unterschreitet dabei deutlich die tatsächlich im Werkstoff auftretenden Eigenspannungen, so führt diese fehlerhafte Annahme gleichermaßen zu einer fehlerhaften Berechnung weiterer Parameter, wie beispielsweise der Tragfähigkeit der Stützstrukturen, welche ebenfalls als zu gering berechnet würde. Die Parameter p und q aus diesem Parametersatz P würden dann in Kombination zu zutreffenden Herstellungsparametern h_{1...n} führen, da sich die Wirkung der fehlerhaften Parameter eliminieren.

Die Prozesszeiten und insbesondere die Nachbearbeitung können somit erheblich reduziert werden und ferner Material, insbesondere im Bereich der Stützstrukturen, durch die Berechnung der Herstellungsparameter mittels des Parametersatzes P und somit Material durch den Verzicht auf eine Überdimensionierung eingespart werden.

Vorzugsweise umfasst der Parameter p Informationen über einen, mehrere oder sämtliche der folgenden:
- Dichteverteilung der Stützstruktur,
- Definition von Position und Größe von Perforationen in homogen verteilten Wandstrukturen der Stützstruktur,
- Lokale Verteilung von einzelnen Segmenten, welche in ihrer Gesamtheit die Strukturen definieren,
- Geometrische Ausbildung der intrinsischen Struktur, insbesondere einer inneren Gitterstruktur der Stützstrukturen,
- Zerlegung der Stützstrukturen in einen oder mehrere Freiformkörper,
- Lokale Steifigkeiten bezogen auf einzelne Raumpunkte oder Bereiche,
- Lokale Bruchdehnung bezogen auf einzelne Raumpunkte oder Bereiche,
- Lokale Zugfestigkeit bezogen auf einzelne Raumpunkte oder Bereiche,
- Position, Art und Größe der Grenzflächen zwischen Grundkörper und Stützstruktur, und
- Im Aufbauprozess auftretende Lasten zwischen Stützstrukturen und Grundkörper.

Der Parameter oder die Parameter können dabei bezogen auf die Einheitszelle bereitgestellt werden. Die Einheits- oder Elementarzelle hat dabei eine periodische Struktur welche sich in Richtung von drei Basivektoren wiederholt. Man kann sich den gesamten Körper aufgebaut aus der Verschiebung der Elementarzelle in alle drei Richtungen des Gitters um ganzzahlige Vielfache der Basisvektoren vorstellen. Alle Punkte des Raumes lassen sich dabei eindeutig einer Elementarzelle zuordnen.

Parameter, welche die lokale Verteilung einzelner Segmente definieren, können insbesondere die Verteilung von Wänden, Stäben oder Balken, insbesondere auch in einem polygonalen Netz, sein.

Untereinander mit Kanten verbundene Punkte bilden in der Computergrafik ein polygonales Netz, das die Gestalt eines Polyeders definiert. Dreiecksnetze und Vierecksnetze sind hier am geläufigsten. Zur Speicherung von Polygonnetzen und Polygonen gibt es eine Reihe bekannter Datenstrukturen. Durch Triangulierung kann beispielsweise ein solches Netz gebildet werden.

Der Parameter oder die Parameter können dabei auch in abstrahierter Form über eine Triangulierung bereitgestellt werden. Unter der Triangulierung oder Triangulation wird hier eine Zerlegung eines Raumes oder einer Fläche in Simplizes (Dreiecke, Tetraeder oder deren höher-dimensionale Verallgemeinerungen) verstanden.

Der Parameter oder die Parameter können dabei ferner durch Zerlegung des Raums in Teilbereiche, wie insbesondere das Voxeln des Raumes, bereitgestellt werden. Die Zerlegung des Raums in Teilbereiche wie insbesondere das Voxeln bezeichnet bei einem räumlichen Datensatz, der in diskretisierter Form in kartesischen Koordinaten vorliegt, den diskreten Wert an einer XYZ-Koordinate des Datensatzes. Bei dieser Definition handelt es sich um das dreidimensionale Äquivalent eines Pixels, somit hat ein Voxel keine bestimmte Form. Man spricht hier auch vom isotropen Voxel oder "Volumenpixel".

In ähnlicher Weise können der Parameter oder die Parameter dabei auch durch Zerlegung des Raums in Teilbereiche, durch Datenpunkte mit beliebiger Verteilung bereitgestellt werden.

Vorzugsweise umfasst der Parameter q Informationen über einen, mehrere oder sämtliche der folgenden:
- Bewegungsbahn eines oder mehrerer Strahlspots, vorzugsweise eines oder mehrerer Laserspots, in einem strahlungsbasierten additiven Herstellungsverfahren,
- Leistungsbezogene Eigenschaften der Strahlquelle, in einem strahlungsbasierten additiven Herstellungsverfahren,
- Ablenkgeschwindigkeit des Strahlspots in strahlungsbasierten Pulverbettverfahren,
- Parameter für den Drahtvorschub in drahtbasierten additiven Fertigkeitsverfahren,
- Parameter für den Pulvereintrag in pulverbasierten Laserauftragsschweißen
- Bewegungsbahn von Werkzeugen zum Materialauftrag, insbesondere im Pulverauftragsschweißen und in drahtbasierten additiven Herstellungsverfahren.

Vorzugsweise umfasst der Muster-Fertigungskörper einen Grundkörper und eine Stützstruktur. Der Grundkörper ist dabei bevorzugt aus einem Vollmaterial gefertigt, wobei die Stützstruktur einen zellulären Aufbau des gleichen Ausgangswerkstoffes aufweist. Durch die Aufteilung des Muster-Fertigungskörpers in einen Grundkörper und eine Stützstruktur kann die Kenngröße insbesondere lokal in einem Bereich bestimmt werden, in welchem der Grundkörper in die Stützstruktur übergeht bzw. formschlüssig mit dieser verbunden ist.

Vorzugsweise werden die Geometrie des Muster-Fertigungskörpers und die Geometrie der Stützstruktur des Muster-Fertigungskörpers vordefiniert. Somit kann in einfacher und effizienter Weise eine gleichbleibende Geometrie des Muster-Fertigungskörpers, beispielsweise mit überdimensionierten Stützstrukturen, bereitgestellt werden, ohne eine vorherige Auswahl oder Simulation vorauszusetzen. Die Maßhaltigkeit oder eine mögliche Überdimensionierung beeinflussen nicht die Erfassung der Kenngröße K an dem Muster-Fertigungskörper, sodass die Bereitstellung des Parametersatzes P somit vereinfacht wird.

Weiter bevorzugt wird die Geometrie der Stützstruktur des Muster-Fertigungskörpers unter der Annahme idealisierter und homogenisierter, insbesondere korrespondierend zu dem Ausgangsmaterial ausgebildeter Werkstoffeigenschaften berechnet. Somit kann die Geometrie der Stützstruktur unter der Annahme idealisierter Bedingungen berechnet werden. Somit wird bei der Erfassung der Kenngröße K insbesondere die Abweichung zum idealisierten und homogenisierten Werkstoffzustand festgestellt.

Gemäß einer bevorzugten Weiterbildung der Erfindung unterscheiden sich die Muster-Fertigungskörper in einem, mehreren oder sämtlichen der folgenden:
- Dichteverteilung der Stützstruktur,
- Definition von Position und Größe von Perforationen in homogen verteilten Wandstrukturen der Stützstruktur,
- Lokale Verteilung von einzelnen Segmenten, welche in ihrer Gesamtheit die Strukturen definieren,
- Geometrische Ausbildung der intrinsischen Struktur, insbesondere einer inneren Gitterstruktur der Stützstrukturen,
- Geometrische Gestaltung der Stützstruktur,
- Verteilung und/oder Anordnung der Stützstruktur,
- Ausbildung der Grenzflächen zwischen Grundkörper und Stützstruktur.

Somit können eine Mehrzahl von die Kenngröße K in Relation zu der strukturellen und/oder geometrischen Gestaltung bzw. Verteilung und/oder der Anordnung der Stützstruktur sowie der Ausbildung der Grenzflächen zwischen Grundkörper und Stützstruktur bestimmt werden. Die Mehrzahl der ermittelten Kenngrößen K_{1...n} werden für die Berechnung des Parametersatzes P bereitgestellt Dies ermöglicht eine weitere Spezifizierung der Parameter p und q zur Charakterisierung der Stützstruktur, welche in dem Parametersatz P hinterlegt sind.

Vorzugsweise werden die Muster-Fertigungskörper auf einer Basisplatte in einem gemeinsamen Aufbauprozess hergestellt und sind mit dieser insbesondere stoffschlüssig verbunden. Somit werden in einem Herstellungsprozess eine Vielzahl von Muster-Fertigungskörpern gefertigt, welche durch den schichtweisen Aufbau auf einer Basisplatte gut handhabbar sind. Somit kann an baugleichen Muster-Fertigungskörpern eine gemittelte Kenngröße Kₘ ermittelt werden. Ferner kann auch eine Mehrzahl von Muster-Fertigungskörpern in einem gemeinsamen Aufbauprozess hergestellt werden, sodass eine Mehrzahl variierender Kenngrößen K_{1...n}, ermittelt werden kann. Ferner wird durch die stoffschlüssigen Verbindungen der Muster-Fertigungskörper mit der Basisplatte die eingebrachte Wärme mittels Wärmeleitung hin zur Basisplatte abgeführt und die Muster-Fertigungskörper werden abgestützt.

Weiter bevorzugt erfolgt die Erfassung der mechanische Kenngröße an der Basisplatte und dem verbundenen Muster-Fertigungskörper oder den verbundenen Muster-Fertigungskörpern. Somit sind die Muster-Fertigungskörper, welche zumeist filigrane Stützstrukturen aufweisen durch die Prüfung der Muster-Fertigungskörper gemeinsam mit der Basisplatte in einfacher Weise handhabbar. Lokale Einflüsse werden minimiert.

Vorzugsweise weist die Basisplatte mindestens einen Kraftsensor, insbesondere einen Druck- und/oder einen Zugsensor auf, welcher dazu eingerichtet ist, eine zwischen der Basisplatte und dem Muster-Fertigungskörper wirkende Zug- und/oder Druckkraft zu erfassen.

Die Erfindung macht sich die Erkenntnis zu Nutze, dass, bedingt durch die Eigenspannungen in dem Grundkörper, Zug- und/oder Druckkräfte auf die Stützstrukturen wirken. Zumindest im unteren Bereich des Muster-Fertigungskörpers sind die Stützstrukturen direkt mit der Basisplatte verbunden, sodass die Zug- und/oder Druckkräfte, welche auf die Stützstrukturen wirken, direkt von Kraftsensoren in der Basisplatte detektiert werden. Somit kann eine äußere Last, welche auf die Stützstrukturen wirkt, identifiziert werden und die Kenngröße K in Abhängigkeit dieser äußeren Last bestimmt werden. Die Erfindung macht sich die Erkenntnis zu Nutze, dass eine Festigkeit und/oder eine Bruchdehnung bei bekannter äußerer Last den Muster-Fertigungskörper, insbesondere den Werkstoff des Muster-Fertigungskörpers im Bereich der Soll-Bruchstellen zwischen Grundkörper und Stützstruktur hinreichend charakterisiert. Somit entfällt die Notwendigkeit für zusätzliche Prüfverfahren und entsprechende Anlagenkosten. Ferner werden die Prozesszeiten durch die direkte Erfassung reduziert.

Der Bereich der Soll-Bruchstellen wird insbesondere durch die Übergangsbereiche zwischen Grundkörper und Stützstruktur definiert, da es in diesen Bereichen zu erheblichen Festigkeitssprüngen bedingt durch eine Querschnittsreduzierung kommt. Insbesondere die Randbereiche des Muster-Fertigungskörpers sind durch eine verstärkte Entstehung oberflächennaher Eigenspannungen derart belastet, dass das Versagen zumeist im Bereich der randnahen Stützstrukturen beginnt.

Gemäß einer bevorzugten Ausführungsform der Erfindung ist die mechanische Kenngröße K₁ eine Festigkeit und/oder eine Bruchdehnung, wobei die Kenngröße K₁ an mindestens einen Muster-Fertigungskörper experimentell bestimmt wird.

Die experimentelle Bestimmung der Kenngröße kann dabei beispielsweise durch Aufbringen und Messen einer äußeren Last bis zum Bruch erfolgen.

Somit kann insbesondere der Grenzbereich der Festigkeit, in welchem die Stützstrukturen gerade noch die in dem Aufbauprozess wirkenden Kräfte aufnehmen, bzw. die Zugfestigkeit und die Bruchdehnung, indirekt mittels der mechanischen Kenngröße K₁ bestimmt werden. In diesem Grenzbereich kommt es bereits zur plastischen Deformation der Stützstrukturen, jedoch nicht zum Versagen. Eine präzise Eingrenzung dieses Bereichs ist von besonderem Interesse, um eine Überdimensionierung der Stützstrukturen zu verhindern und damit die Prozesszeit des Aufbauprozesses zu reduzieren. Zudem können die Grenzfläche zwischen den Stützstrukturen und dem Bauteil und der angrenzende Bereich der Stützstrukturen genauer dimensioniert werden. Für eine Berechnung mittels einer Finiten-Elementen-Methode ist dabei insbesondere die maximale Zugfestigkeit bzw. die Spannung bis zum Bruch von großer Bedeutung, da sich die Spannung in diesem Bereich nur schwer bzw. oftmals nur unzureichend durch Simulationen abbilden lassen.

Die Erfindung wird vorteilhaft durch die Berechnung einer thermisch induzierten Vorspannkraft weitergebildet, welche durch den Grundkörper des Muster-Fertigungskörpers auf die zugeordnete Stützstruktur aufgebracht wird. Die Berechnung kann durch Modellannahmen erfolgen, welche ein idealisiertes Gefüge des Grundkörpers und der durch den Wärmeeintrag entstehenden temperaturbedingten Eigenspannungen annehmen. Somit können auch ohne Kenntnis des genauen Querschnitts der Kontaktfläche zwischen Stützstruktur und Grundkörper, die wirkenden Kräfte in näherungsweise berechnet werden.

Vorzugsweise wird der Aufbauprozess durch eine Simulation modelliert, insbesondere berechnet, und die thermisch induzierte Vorspannkraft wird aus der Simulation des Aufbauprozesses bestimmt. Somit wird durch eine Simulation, welche den Aufbauprozess simuliert, eine Vorspannkraft bedingt durch die thermisch induzierten Eigenspannungen in den Grundkörper berechnet. Somit ist es möglich den Einfluss des Herstellungsprozesses zu eliminieren und einen Kennwert zu erfassen, welcher die tatsächlichen mechanischen Eigenschaften des Muster-Fertigungskörpers charakterisiert.

Besonders bevorzugt werden dabei die Eigenschaften der Stützstruktur in der Simulation iterativ mit sich anpasst, bis der aus der berechneten Vorspannkraft resultierende Verzug weitestgehend minimiert wird.

Vorzugsweise wird die thermisch induzierten Vorspannkraft als Funktion mindestens eines in einer Datenbank bereitgestellten Parameters und der Bauteilgeometrie des Muster-Fertigungskörpers bereitgestellt. Somit kann die thermisch induzierte Vorspannkraft mittels eines Parameters, welcher durch Abfrage einer Datenbank bereitgestellt wird, berechnet werden. Diese Berechnung erfordert keine genauen Kenntnisse des Prozesses, sondern wird durch den in der Datenbank bereitgestellten Parameter in einfacher Weise anhand der jeweiligen Bauteilgeometrie berechnet. Es entfallen somit Iterationsschleifen und Rechenschritte, sodass thermisch induzierte Vorspannkraft mit einer reduzierten Rechenleistung bereitgestellt werden kann.

Gemäß einer bevorzugten Weiterbildung der Erfindung wird ein zweiter Muster-Fertigungskörper mit einer durch die Herstellungsparametern h_{1...n}, welche als Funktion des Parametersatzes P berechnet werden, optimierten Stützstrukturgeometrie hergestellt, wobei die Berechnung der thermisch induzierten Vorspannkraft aus der Simulation des Aufbauprozesses des zweiten Muster-Fertigungskörpers erfolgt. Somit wird die Genauigkeit der Berechnung der thermisch induzierten Vorspannkraft, welche prozessbedingt auf die Stützstrukturen wirkt, erhöht. Durch das iterative Vorgehen, werden die Einflüsse des Aufbauprozesses auf die Kenngröße K weitestgehend eliminiert und der Parametersatz p zur Berechnung der Herstellungsparameter weiter spezifiziert.

Gemäß einer bevorzugten Ausführungsform der Erfindung ist die geometrische Kenngröße K₂ ein Verzug und/oder eine Längenänderung und/oder ein Abstand ist und/oder eine Projektionsfläche ist, und wird durch Vermessung des mindestens einem Muster-Fertigungskörpers bestimmt. Eine geometrische Kenngröße kann in einfacher Weise ohne hohe Kosten für Prüfeinrichtungen erfasst werden. Ferner die Prozesseinflüsse durch die geometrische Ausbildung des Fertigungskörpers und insbesondere auf den Stützstrukturen charakterisiert. Aus diesen geometrischen Größen können ferner werkstoffspezifische, mechanische Kennwerte oder zumindest Näherungswerte abgeleitet werden.

Als ein Näherungswert wird hier ein Wert verstanden, welcher den Werkstoffzustand charakterisiert, diesen aber nicht quantitativ bestimmt. Es ist somit im Sinne der Erfindung, dass ein solcher Richtwert beispielsweise den E-Modul des Werkstoffes beschreibt, aber um einen beliebigen Faktor von diesem abweicht. Wesentlich ist dabei, dass die Relation zwischen den abgeleiteten Werkstoffeigenschaften des Grundkörpers des Muster-Fertigungskörpers mit denen der Stützstruktur des Muster-Fertigungskörpers korreliert. Eine exakte Bestimmung der Werkstoffeigenschaften ist somit nicht erforderlich.

Vorzugsweise wird die geometrische Kenngröße K₂ in einem vordefinierten Bereich des Muster-Fertigungskörpers lokal erfasst. Durch die lokale Erfassung der geometrischen Kenngröße K₂ wird der Muster-Fertigungskörper insbesondere in solchen Bereichen charakterisiert, in welchen ein Versagen in Folge der thermisch induzierten Eigenspannungen im Grundkörper zu erwarten ist. Der Informationsgewinn ist somit deutlich erhöht und der Prozesszeit zum Erfassen der Kenngröße K kann reduziert werden.

Vorzugsweise ist die mindestens eine Kenngröße K₂ ein durch den Aufbauprozess thermisch induzierter Verzug des Grundkörpers und/oder der Stützstruktur. Somit kann die Kenngröße direkt bestimmt werden und es entfällt die Notwendigkeit für zusätzliche Prüfverfahren und entsprechende Anlagenkosten werden vermieden. Ferner werden die Prozesszeiten reduziert.

Der thermisch induzierte Verzug des Grundkörpers und/oder der Stützstruktur charakterisiert die wesentlichen Prozesseinflüsse des Aufbauprozesses auf den Muster-Fertigungskörper. Die daraus abgeleitete Kenngröße K charakterisiert somit eine wesentliche Eigenschaft des Muster-Fertigungskörpers, sodass der Parametersatz P und insbesondere die darin enthaltenen Parameter p und q die Stützstrukturen derart charakterisieren, dass die Herstellungsparameter h_{1...n} für die Stützstrukturen mit einer hohen Genauigkeit berechnet werden können.

Weiter bevorzugt ist die Kenngröße K₂ eine Längenänderung des Muster-Fertigungskörpers, welche durch das Aufbringen einer äußeren Last bis zum Bruch induziert wird, wobei die äußere Last eine oder mehrere, der folgenden umfasst:
- eine thermisch induzierte Vorspannkraft, welche im Aufbauprozess durch den Grundkörper auf die Stützstruktur aufgebracht wird, und/oder
- eine äußere Last mit einem vordefinierten Kraftverlauf, welche auf den Muster-Fertigungskörper aufgebracht wird.

Somit kann insbesondere der Grenzbereich der Festigkeit, in welchem die Stützstrukturen gerade noch die in dem Aufbauprozess wirkenden Kräfte aufnehmen, bzw. die Zugfestigkeit und die Bruchdehnung, indirekt mittels der geometrischen Kenngröße K₂ bestimmt werden. In diesem Grenzbereich kommt es bereits zur plastischen Deformation der Stützstrukturen, jedoch nicht zum Versagen. Eine präzise Eingrenzung dieses Bereichs ist, wie vorstehend beschrieben, von besonderem Interesse

Gemäß einer bevorzugten Ausführungsform der Erfindung wird die geometrische Kenngröße K₂ automatisiert durch optische Vermessung integrierter Messpunkte auf der Oberfläche des Muster-Fertigungskörpers, insbesondere Vertiefungen oder Vorsprünge, bereitgestellt. Somit wird die Prozesssicherheit gesteigert und die der erfassten Kenngrößen in einfacher Weise verglichen werden.

Gemäß einer weiteren bevorzugten Ausführungsform der Erfindung wird die die geometrische Kenngröße K₂ durch optische und/oder taktile Messverfahren, vorzugsweise automatisiert, bereitgestellt.

Taktile Messverfahren werden bevorzugt zur Ermittlung von Form, Lage und Maßen des Muster-Fertigungskörpers eingesetzt. Das Messverfahren beruht auf dem Abtasten der Werkstoffoberfläche mit berührungsaktiven Sensoren, die die Oberfläche des Werkstoffs Punkt für Punkt abtasten. Die Erfindung macht sich die Erkenntnis zu Nutze, dass die Genauigkeiten solcher tastenden Systeme sehr hoch ist und Werte im Mikrometerbereich und teils, je nach Ausführung, noch darunter erzielt.

Bei optischen Messverfahren fungiert das Licht als messendes Medium auf der Grundlage von Reflexion und Absorption. Optische Sensoren sind dabei in der Lage, alle visuell zugänglichen Bereiche auf der Oberfläche des Muster-Fertigungskörpers zu erfassen und auszuwerten. Im Gegensatz zur taktilen Messtechnik werden durch flächenhaftes Scannen digitale Abbilder erstellt. Während beim taktilen Messen lediglich Punktinformationen ausgewertet werden, können gescannte Geometrien flächig und mit einer Vielzahl von Messpunkten mit dem Referenzmodell abgeglichen werden.

Durch die Kombination beider Verfahren werden die detaillierten Informationen der taktilen Messtechnik mit den flächigen und in einfacher Weise darstellbaren Informationen der optischen Messtechnik kombiniert.

Die Erfindung wird vorteilhaft durch eine Hebeleinheit weitergebildet, welche dazu eingerichtet ist, eine äußere Last auf den Muster-Fertigungskörper aufzubringen, wobei die Kenngröße K als Funktion des Hebelarms und/oder der äußeren Last bereitgestellt wird.

Somit kann in einfacher Weise eine günstige und funktionale Vorrichtung bereitgestellt werden, welche es ermöglicht eine variable Last in Abhängigkeit des Hebelarms auf den Muster-Fertigungskörper aufzubringen.

Vorzugsweise umfasst die Hebeleinheit einen Hebelarm und eine korrespondierende Hebelarm-Aufnahme, wobei die Hebelarm-Aufnahme an dem Grundkörper des Muster-Fertigungskörpers ausgebildet ist. Durch die an dem Muster-Fertigungskörper ausgebildete Hebelarm-Aufnahme wird ferner sichergestellt, dass die äußere Last, welche durch die Hebeleinheit aufgebracht wird, in einer definierten und insbesondere reproduzierbaren Weise auf den Muster-Fertigungskörper aufgebracht wird.

Die Erfindung wird vorteilhaft durch das Bereitstellen eines werkstoffspezifischen Kennfeldes W weitergebildet, in dem mindestens ein mechanischer Kennwert W_{1,...n} zur Charakterisierung des Ausgangsmaterials hinterlegt ist, wobei der Parametersatz P als Funktion der mindestens einen Kenngröße K, der Bauteilgeometrie und des mindestens ein mechanischen Kennwertes W_{1,...n} berechnet wird.

Durch das Bereitstellen eines werkstoffspezifischen Kennfeldes steigt der Informationsgehalt des Parametersatzes P zur Charakterisierung der Stützstrukturen, sodass die Herstellungsparameter, mit einer erhöhten Genauigkeit berechnet werden. Werkstoffspezifische Einflüsse werden somit berücksichtig.

Weiter bevorzugt wird die Erfindung durch das Bereitstellen eines prozessspezifischen Kennfeldes A weitergebildet, in dem mindestens ein Prozessparameter A_{1,...n} zur Charakterisierung des Aufbauprozesses hinterlegt ist, wobei der Parametersatze P als Funktion der mindestens einen Kenngröße K, der Bauteilgeometrie und des mindestens ein mechanischen Kennwertes W_{1,...n} berechnet wird, wobei die Kennwerte A_{1...n} des prozessspezifische Kennfeldes einen, mehrere oder sämtliche der folgenden umfassen:
- Laserleistung,
- Spot-Geschwindigkeit,
- Schutzgasatmosphäre,
- Vor-Temperierung und Geometrie der Basisplatte,
- Schichtdicke des hinzugefügten Ausgangsmaterials.

Die Bindungsmechanismen und die Porosität des verfestigten Materials hängen vom Umfang der zugeführten Energie und der Art der Einbringung ab. Diese beeinflussen wiederum maßgeblich die sich einstellenden Werkstoffeigenschaften und Eigenspannungen.

Durch das Bereitstellen eines prozessspezifischen Kennfeldes steigt der Informationsgehalt des Parametersatzes P zur Charakterisierung der Stützstrukturen, sodass die Herstellungsparameter, welche den Aufbauprozess der Stützstruktur definieren, mit einer erhöhten Genauigkeit berechnet werden. Prozessspezifische Einflüsse werden somit berücksichtig.

Die Erfindung wurde vorstehend in einem ersten Aspekt mit Bezug auf ein additives Herstellungsverfahren beschrieben. Die Erfindung löst die zugrundeliegende Aufgabe in einem zweiten Aspekt durch ein Verfahren zur Bereitstellung mindestens eines Herstellungsparameters h_{1...n}, für additives Herstellungsverfahren, insbesondere ein pulverbettbasiertes selektives Laserstrahlschmelzen, vorzugsweise nach einer der vorstehend beschriebenen Ausführungen, zum Herstellen eines dreidimensionalen metallischen Bauteils aus mehreren Bauteilschichten, wobei das Bauteil als Teil eines Fertigungskörpers, umfassend einen Grundkörper, welcher das herzustellende Bauteil spezifiziert, und eine Stützstruktur zum Stützen und Fixieren des Grundkörpers, hergestellt wird, wobei ein Herstellungsparameter h_{1...n} den Aufbauprozess der Stützstruktur definiert und als Funktion des Parametersatzes P, insbesondere mittels einer Finite-Elemente-Methode, berechnet wird, dadurch gekennzeichnet, dass der Parametersatz P mindestens einen Parameter p zur Charakterisierung der Stützstruktur umfasst und als Funktion der Geometrie des Bauteils, insbesondere des Grundkörpers und mindestens einer Kenngröße K₁, K₂ bereitgestellt wird, wobei die Kenngröße eine mechanische K₁ und/oder eine geometrische Kenngröße K₂ ist, welche an mindestens einem, vorzugsweise geometrisch vereinfachten und insbesondere standardisierten, Muster-Fertigungskörper erfasst wird. Hinsichtlich der erreichten Vorteile eines solchen Verfahrens sei auf die obenstehenden Ausführungen verwiesen.

Die Erfindung wird nachfolgend anhand von Ausführungsbeispielen unter Bezugnahme auf die beigefügten Figuren beispielhaft beschrieben. Dabei zeigen:
- Figur 1:: Ein additives Herstellungsverfahren gemäß dem Stand der Technik,
- Figur 2:: Ein erfindungsgemäßes additives Herstellungsverfahren zum Herstellen eines dreidimensionalen metallischen Bauteils,
- Figur 3:: Ein erstes Ausführungsbeispiel des Verfahrens zur Bereitstellung des Parametersatzes P für die Berechnung des Herstellungsparameters h_{1...n} gemäß dem in Figur 2 gezeigten Verfahren,
- Figur 4:: Ein zweites Ausführungsbeispiel des Verfahrens zur Bereitstellung des Parametersatzes P für die Berechnung des Herstellungsparameters h_{1...n} gemäß dem in Figur 2 gezeigten Verfahren,
- Figur 5:: Ein drittes Ausführungsbeispiel des Verfahrens zur Bereitstellung des Parametersatzes P für die Berechnung des Herstellungsparameters h_{1...n} gemäß dem in Figur 2 gezeigten Verfahren,
- Figur 6:: Ein viertes Ausführungsbeispiel des Verfahrens zur Bereitstellung des Parametersatzes P für die Berechnung des Herstellungsparameters h_{1...n} gemäß dem in Figur 2 gezeigten Verfahren,
- Figur 7:: Ein fünftes Ausführungsbeispiel des Verfahrens zur Bereitstellung des Parametersatzes P für die Berechnung des Herstellungsparameters h_{1...n} gemäß dem in Figur 2 gezeigten Verfahren,
- Figur 8:: Die Erfassung der Kenngröße K unter Aufbringung einer äußeren Last für ein Verfahren gemäß einem der in den Figuren 3 bis 6 gezeigten Ausführungsbeispiele,
- Figur 9:: Eine Hebeleinheit 13 zur Aufbringung einer äußeren Last auf den Muster-Fertigungskörper,
- Figur 10:: Drei sich unterscheidende Varianten von Muster-Fertigungskörpern 200a, 200b, 200c,
- Figur 11:: die Bestimmung einer geometrischen Kenngröße K₂ an sich unterscheidende Varianten von Muster-Fertigungskörpern 200d, 200e, 200f.

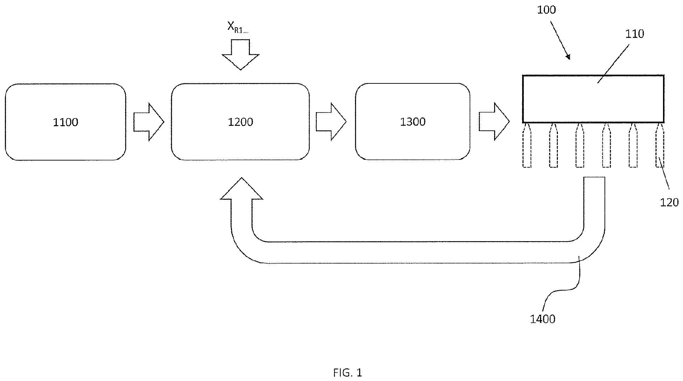

Figur 1 zeigt ein additives Herstellungsverfahren zum Herstellen eines dreidimensionalen metallischen Bauteils aus mehreren Bauteilschichten, wobei das Bauteil als Teil eines Fertigungskörpers, umfassend einen Grundkörper, welcher das herzustellende Bauteil 5 spezifiziert, und eine Stützstruktur zum Stützen und Fixieren des Grundkörpers, hergestellt wird, wie es aus dem Stand der Technik bekannt ist.

In einem ersten Schritt 1100 wird eine dreidimensionale Bauteilgeometrie des herzustellenden Bauteils definiert.

In einem zweiten Schritt 1200 wird mindestens ein erster Herstellungsparameter, welcher den Aufbauprozess des Grundkörpers definiert und mindestens ein zweiter Herstellungsparameter, welcher den Aufbauprozess der Stützstruktur definiert, berechnet. Eine solche Berechnung wird beispielsweise mittels der Finite-Elemente-Methode durchgeführt. Die Berechnung der Herstellungsparameter 1200 erfolgt unter der Annahme von Variablen X_{R1}...X_{Rn}, welche sich auf Fertigungs- und Werkstoffparameter beziehen, welche nicht bekannt sind und deren Bestimmung aus ökonomischer Sicht nicht sinnvoll wäre, ermittelt werden können. Diese Parameter bilden die notwendigen Bedingungen für die numerische Berechnung mittels der Finiten-Elementen-Methode.

In einem dritten Schritt 1300 wird der Fertigungskörper in einem Aufbauprozess mit den entsprechenden in Schritt 1200 berechneten Parametern hergestellt. Das Herstellen wird dabei in einem Aufbauprozess durch mehrfaches Hinzufügen von Ausgangsmaterial und formgebendes Verfestigen des Ausgangsmaterials durchgeführt.

Nach dem Herstellen des Fertigungskörpers 1300 wird der Fertigungskörper 100 vermessen oder optisch begutachtet und fließt in Schritt 1400 iterativ in die Berechnung verbesserter Herstellungsparameter in Schritt 1200 mit ein.

Der in Figur 1 dargestellte Prozess wird somit mehrfach wiederholt, bis der Fertigungskörper 100 in einem Zustand hergestellt wird, welcher das iterative Vorgehen in Schritt 1400 nicht weiterhin erfordert. Mit diesen iterativ ermittelten Herstellungsparametern werden daraufhin ein oder mehrere Fertigungskörper hergestellt.

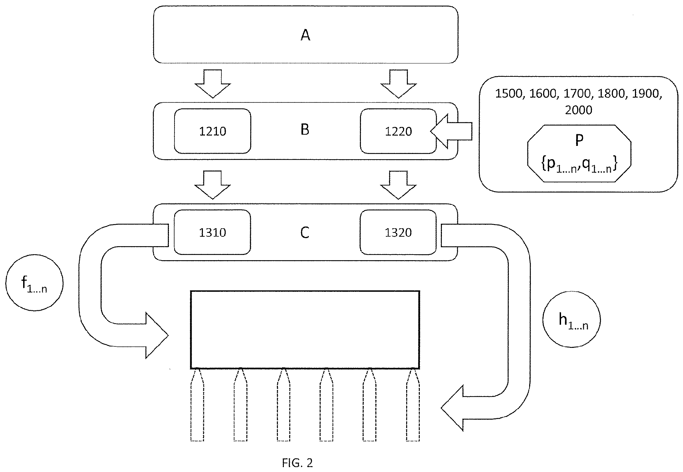

Figur 2 zeigt ein additives Herstellungsverfahren zum Herstellen eines dreidimensionalen metallischen Bauteils aus mehreren Bauteilschichten, wobei das Bauteil als Teil eines Fertigungskörpers, umfassend einen Grundkörper, welcher das herzustellende Bauteil spezifiziert, und eine Stützstruktur zum Stützen und Fixieren des Grundkörpers, hergestellt wird, mit einem ersten Schritt A, in welchem eine dreidimensionalen Bauteilgeometrie bzw. die Grundkörpergeometrie des Fertigungskörpers definiert wird.

In einem zweiten Schritt B wird mindestens ein erster Herstellungsparameter f_{1...n} berechnet 1210, der den Aufbauprozess des Grundkörpers definiert und mindestens ein zweiter Herstellungsparameter h_{1...n} 1220, der den Aufbauprozess der Stützstruktur definiert. Das Berechnen des zweiten Herstellungsparameters h_{1...n} 1220 erfolgt mittels eines Parametersatzes P, welcher in Schritt 1500 1600, 1700, 1800, 1900, 2000 für die Berechnung bereitgestellt wird. Der Herstellungsparameter h_{1...n} wird als Funktion des Parametersatzes P, insbesondere einer Finiten-Elementen-Methode berechnet.

In einem dritten Schritt C wird der Fertigungskörper durch einen Aufbauprozess, welcher mehrfaches Hinzufügen von Ausgangsmaterial und formgebendes Verfestigen umfasst, hergestellt 1310, 1320. Das Herstellen umfasst den Aufbauprozess des Grundkörpers 1310, wobei der Herstellungsparameter f_{1...n} den Aufbauprozess charakterisiert und den Aufbauprozess der Stützstruktur 1320, welcher durch den Herstellungsparameter hi..n charakterisiert wird.

Das Herstellen des Fertigungskörpers erfolgt bevorzugt durch selektives Schmelzen und/oder Sintern des Ausgangsmaterials in einem Pulverbettverfahren.

Der Parametersatz P umfasst dabei mindestens einen Parameter p_{1...n}, welcher die Stützstruktur charakterisiert und/oder mindestens ein Parameter q_{1..n}, welcher den Aufbauprozess charakterisiert.

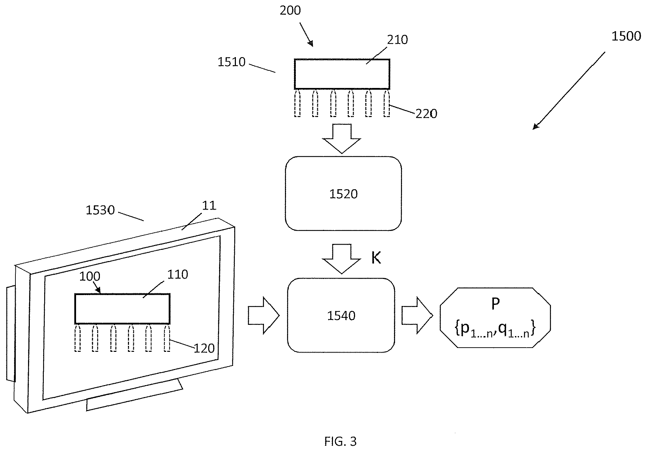

Figur 3 zeigt das Verfahren 1500 zur Bereitstellung des Parametersatzes P für die Berechnung des Herstellungsparameters h_{1...n} gemäß Figur 2.

In einem ersten Schritt 1510 wird ein Muster-Fertigungskörper hergestellt. Dieser Muster-Fertigungskörper 200 umfasst einen Grundkörper 210 und eine Stützstruktur 220.

In einem zweiten Schritt 1520 wird eine Kenngröße K an dem Muster-Fertigungskörper 200 erfasst.

Ferner umfasst das Verfahren 1500 das Bereitstellen 1530 einer, insbesondere in Schritt A gemäß Figur 2 definierten, Geometrie des Bauteils und insbesondere des Grundkörpers 110 des Fertigungskörpers 100.

Die in Schritt 1520 erfasste Kenngröße K und die in Schritt 1530 bereitgestellte Geometrie des Grundkörpers 110 des Fertigungskörpers 100 werden einem Prozessor bereitgestellt 1540. Dieser Prozessor ist dazu eingerichtet einen Parametersatz P, welcher mindestens einen Parameter p_{1...n} umfasst, welcher die Stützstruktur charakterisiert, und mindestens einen Parameter q_{1...n}, welcher den Aufbauprozess der Stützstruktur charakterisiert, als Funktion der Kenngröße K und der in Schritt A definierten bzw. in Schritt 1530 bereitgestellten Bauteilgeometrie, bzw. Grundkörpergeometrie des Fertigungskörpers 100 zu berechnen.

Die Kenngröße K kann dabei sowohl eine mechanische Kenngröße K₁, wie beispielsweise eine Festigkeit oder eine Bruchdehnung, als auch eine geometrische Kenngröße K₂ sein. Somit kann der Schritt des Erfassens 1520 beispielsweise ein Zugversuch oder ein optisches oder taktiles Messverfahren sein. Der Schritt des Erfassens 1520 kann dabei an einem oder auch mehreren Muster-Fertigungskörpern erfolgen. Mit steigender Anzahl an Muster-Fertigungskörpern 200, in welchen die Kenngröße K erfasst wird, steigt deren Genauigkeit.

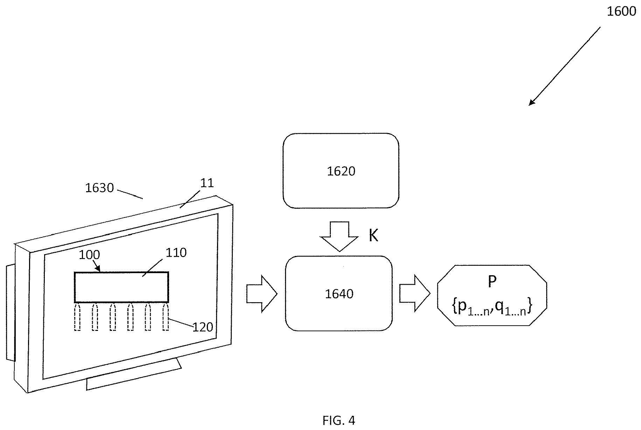

In einem alternativen Verfahren gemäß Figur 4 zur Bereitstellung des Parametersatzes P gemäß Figur 2 ist die Kenngröße K bereits einmalig erfasst worden, sodass in einem zweiten Schritt 1620 nur noch die Bereitstellung der Kenngröße K erforderlich ist.

Ferner umfasst das Verfahren 1600 das Bereitstellen 1630 einer, insbesondere in Schritt A gemäß Figur 2 definierten, Bauteilgeometrie des Grundkörpers 110 des Fertigungskörpers 100.

Die in Schritt 1620 bereitgestellte Kenngröße K und die in Schritt 1630 definierte Geometrie des Bauteils, insbesondere des Grundkörpers 110 des Fertigungskörpers 100werden einem Prozessor bereitgestellt 1640, welcher den Parametersatz P als Funktion der Kenngröße K und der Bauteilgeometrie berechnet.

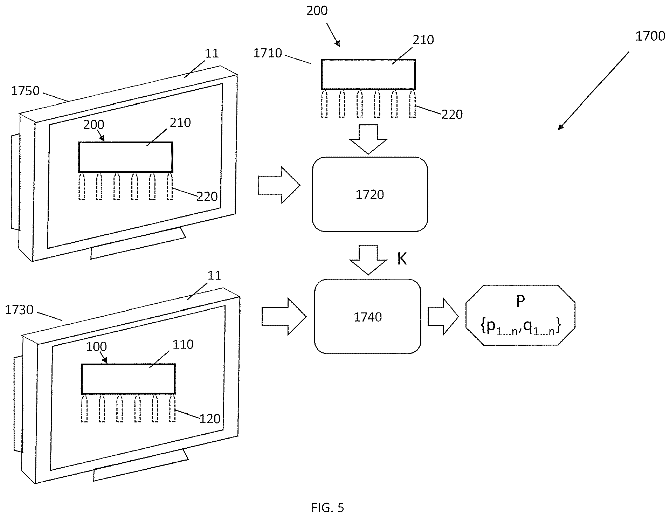

Gemäß dem in Figur 5 gezeigten Verfahren 1700 zur Bereitstellung des Parametersatzes P gemäß Figur 2 wird die Kenngröße K unter Berücksichtigung einer Vorspannkraft, welche durch eine Aufbausimulation des Muster-Fertigungskörpers 200 in Schritt 1750 bereitgestellt wird, erfasst. Die im Aufbauprozess in dem Grundkörper 210 entstehenden Eigenspannungen wirken als eine äußere Last auf die Stützstrukturen 220.

Wird in Schritt 1720 beispielsweise die Festigkeit der Verbindung zwischen Grundkörper 210 und Stützstruktur 220 erfasst, so wirken diese Eigenspannungen als eine Art Vorspannung, welche zu der äußeren Last addiert werden. Die daraus resultierende optimierte Kenngröße K ermöglicht somit eine bessere Abbildung des tatsächlichen Werkstoffzustandes. Der Parametersatz P, welcher in Schritt 1740 mittels der in Schritt 1730 definierten Geometrie des Bauteils, bzw. des Grundkörpers 110 des Fertigungskörpers 100 und der optimierten Kenngröße K berechnet wird, ermöglicht somit eine erhöhte Genauigkeit bei der Berechnung der Herstellungsparameter h_{1...n}.

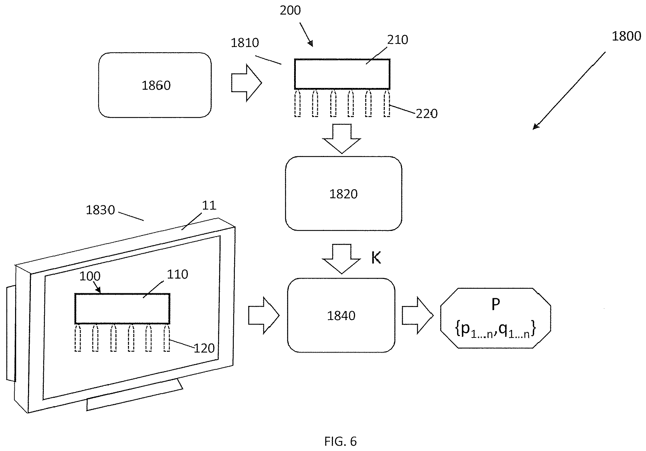

Das in Figur 6 gezeigte Verfahren 1800 zur Bereitstellung des Parametersatzes P gemäß Figur 2 berücksichtigt bei dem Erfassen 1820 der Kenngröße K an dem Muster-Fertigungskörper 200 ebenfalls das Auftreten von Eigenspannung in dem Grundkörper 210, welche nach Art einer Vorspannkraft auf die Verbindung zwischen Grundkörper 210 und Stützstruktur 220 wirken.

Gemäß des in Figur 6 gezeigten Verfahren wird diese Vorspannkraft in Schritt 1860 als Funktion mindestens eines in einer Datenbank hinterlegten Parameters bereitgestellt. Die notwendige Zeit für eine Rechenoperation, durch eine Simulation des Aufbauprozesses die Vorspannkraft bereitgestellt wird, kann somit reduziert werden. Durch die Gestaltung des Muster-Fertigungskörpers korrespondierend zu den in der Datenbank hinterlegten Datensätzen, welche sich auf vordefinierte Geometrien des Muster-Fertigungskörpers beziehen, kann somit die Prozesszeit erheblich reduziert werden.

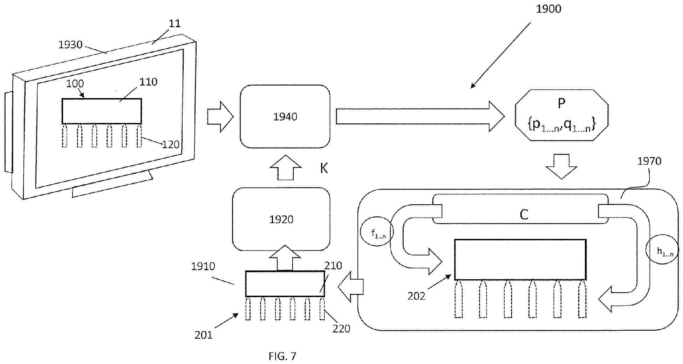

Figur 7 zeigt ein Verfahren zur Bereitstellung eines Parametersatzes P für ein Verfahren gemäß Figur 2. Das Verfahren umfasst das Herstellen 1910 des Muster-Fertigungskörpers 201. In dem Muster-Fertigungskörper 201 wir die Kenngröße K in Schritt 1920 erfasst. Ferner wird die Geometrie des Bauteils, bzw. die Grundkörpergeometrie des Fertigungskörpers 100 bereitgestellt 1930. In Schritt 1940 wird der Parametersatz P als Funktion der Kenngröße K und der Geometrie des Bauteils berechnet.

Der Parametersatz P umfasst mindestens eine Kenngröße p_{1...n}, welche die Stützstruktur charakterisiert und mindestens eine Kenngröße q_{1...n}, welche den Aufbauprozess charakterisiert.

In Schritt 1970 wird mittels des Parametersatzes P der mindestens eine Herstellungsparameter h_{1...n} berechnet und ferner ein zweiter Muster-Fertigungskörper 202 hergestellt, welcher Stützstrukturen aufweist, welche in einem Aufbauprozess mit den mittels des Parametersatzes berechneten Herstellungsparametern h_{1...n} hergestellt wurden. In Schritt 1910 kann daraufhin erneut eine Kenngröße K an dem optimierten Muster-Fertigungskörper 202 erfasst werden. Der Parametersatz P kann somit ermittelt und insbesondere iterativ optimiert werden.

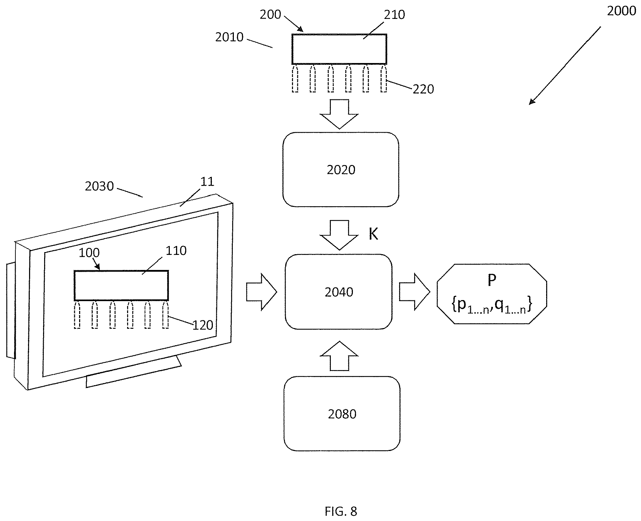

Gemäß der in Figur 8 gezeigten Ausführungsform des Verfahrens 2000 zum Bereitstellen des Parametersatzes P für ein Verfahren gemäß Figur 2, wird zur Berechnung des Parametersatzes P in Schritt 2040 neben der in Schritt 2020 erfassten Kenngröße K und der durch den Prozessor in Schritt 2030 bereitgestellten Geometrie des Bauteils bzw. des Grundkörpers des Fertigungskörpers 200 auch ein Kennfeld in Schritt 2080 bereitgestellt.

Das Kennfeld kann ein werkstoffspezifisches Kennfeld W, in welchem mindestens ein mechanischer Kennwert W_{1...n} zur Charakterisierung des Ausgangsmaterials hinterlegt ist, oder ein prozessspezifisches Kennfeld A, in welchem mindestens ein Prozessparameter A_{1..n} zur Charakterisierung des Aufbauprozesses hinterlegt ist, sein.

Bevorzugt können auch beide Kennfelder in Schritt 2080 zur Berechnung des Parametersatzes P in Schritt 2040 bereitgestellt werden. Die Eingabe kann bevorzugt mittels einer Benutzerschnittstelle erfolgen oder automatisiert durch die Verbindung mit einer Datenbank und in diesen hinterlegten Kennfeldern durchgeführt werden.

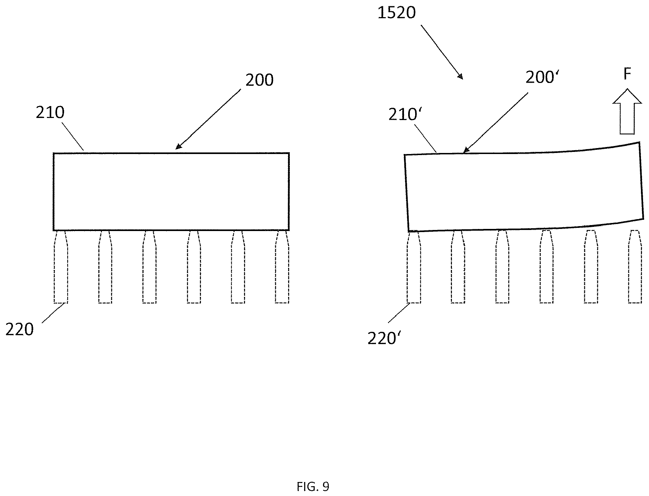

Das in Figur 9 gezeigte Ausführungsbeispiel für ein Verfahren zur Bereitstellung des Parametersatzes P gemäß Figur 2 zeigt das Erfassen der Kenngröße K. Dabei wird eine äußere Last F lokal auf den Grundkörper 210 aufgebracht, welche zum Ablösen der Stützstrukturen 220 von dem Grundkörper 210 führt. Durch Messen der Kraft, welche zum Ablösen erst der Stützstrukturen führt, kann die Zugfestigkeit der hochbeanspruchten Stützstrukturen in den Randbereichen des Muster-Fertigungskörpers angenähert werden.

Durch Erfassen der Längenänderung bzw. Dehnung des Muster-Fertigungskörpers 200 und insbesondere der Stützstrukturen 220, kann die Bruchdehnung als Kenngröße K angenähert werden.

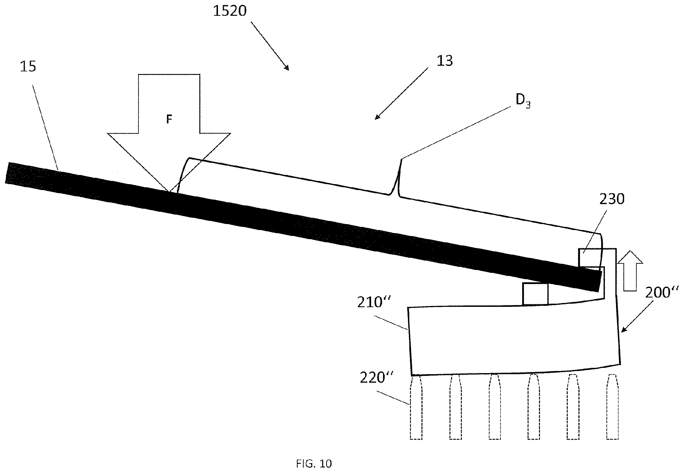

Figur 10 zeigt eine Hebeleinheit 13 mit einem Hebelarm 15 und einer korrespondierenden Hebelarm-Aufnahme 230. Die Hebeleinheit 13 ist dazu eingerichtet, eine äußere Last auf den Muster-Fertigungskörper 200" aufzubringen. Die Kenngröße K wird dabei als Funktion des Hebelarms 15 und/oder der äußeren Last F bereitgestellt.

Die Hebelarm-Aufnahme 230 ist an dem Grundkörper 210" des Muster-Fertigungskörpers 200" ausgebildet.

Die Hebelarm-Aufnahme 230 umfasst eine Eingriffskante 250. Der Hebelarm 15 liegt auf einer Auflagekante 17 auf und greift endseitig in die Eingriffskante 250 der Hebelarm-Aufnahme 230 ein. Die Auflagekante 17 kann an dem Grundkörper 210", einer Basisplatte, auf welcher der Muster-Fertigungskörper aufgebaut wird, als separates Bauteil oder als Teil des Hebelarms 15 bereitgestellt werden.

Die Kenngröße K kann durch eine veränderliche Last bei einem konstanten Hebelarm durch Erhöhen der Last F bis zum Ablösen der Stützstrukturen 220" von dem Grundkörper 210" bestimmt werden. Bevorzugt kann die Kenngröße K auch durch eine konstante Last F und Erhöhen des Hebelarms D3 bis zum Ablösen der Stützstrukturen 220" vom Grundkörper 210" bestimmt werden. Durch die in Figur 10 gezeigte Hebeleinheit 13 kann die Kenngröße K gemäß Schritt 1520, 1720, 1820, 1920, 2020 bestimmt werden.

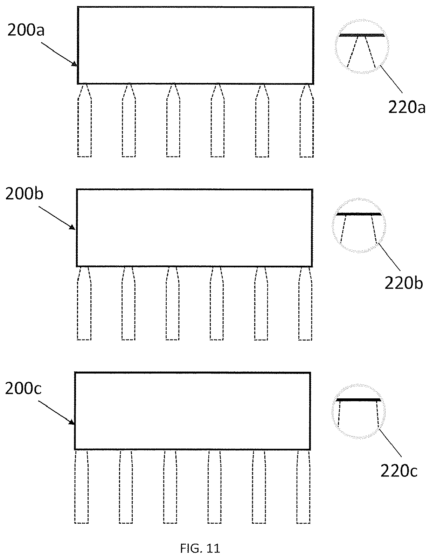

Figur 11 zeigt drei Varianten von Muster-Fertigungskörpern 200a, 200b, 200c, welche sich hinsichtlich der Ausbildung der Grenzflächen zwischen den Grundkörpern und den Stützstrukturen unterscheiden. Insbesondere variieren die Querschnittsflächen der Grenzflächen zwischen Grundkörper und Stützstruktur. Die Stützstrukturen weisen über einen Großteil ihrer Höhe einen identischen Querschnitt auf und variieren erst im Bereich der Anbindung zwischen Grundkörper 210a, 210b, 210c und Stützstruktur 220a, 220b, 220c.

Die Querschnittsfläche hat insbesondere einen Einfluss auf die Festigkeit der Verbindung, da durch die Querschnittsreduzierungen in diesem Bereich eine Sollbruchstelle ausgebildet wird. Somit reißt der Muster-Fertigungskörper 200, aber auch das spätere Bauteil bei einer Überlast im Bereich der Anbindung der Stützstrukturen an den Grundkörpern und führt nicht zu Schäden an dem Grundkörper.

Eine idealisierte Ausbildung der Grenzflächen zwischen Grundkörper und Stützstruktur sieht eine derart gewählte Querschnittsfläche vor, welche ein Versagen nach erfolgter Herstellung des Muster-Fertigungskörpers 200 bzw. Bauteils bei nur geringer Mehraufwendung an einer äußeren Last vorsieht.

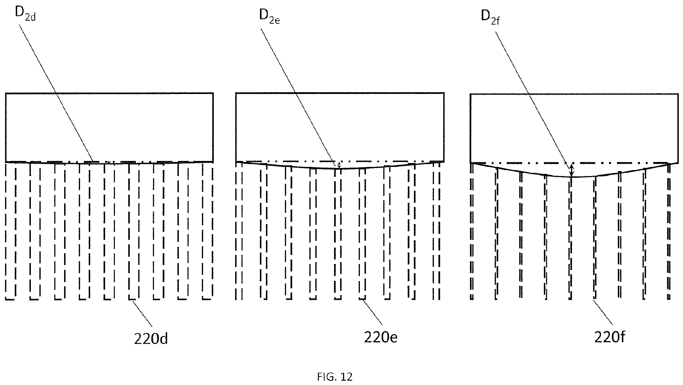

Figur 12 zeigt drei variierende Muster-Fertigungskörper 200d, 200e, 200f, an welchen jeweils eine geometrische Kenngröße K bestimmt wird. Die geometrische Kenngröße K ist in diesem Fall eine Durchbiegung bzw. ein Verzug D. Dieser variiert in Abhängigkeit der Dicke und Verteilung der Stützstrukturen 220d, 220e, 220f. Die geometrische Kenngröße K kann dabei mittels optischer Messverfahren bestimmt werden. Besonders bevorzugt wird die geometrische Kenngröße K automatisiert durch optisches Vermessen des Grundkörpers 210d, 210e, 210f erfasst werden.

Durch die abweichende Geometrie der Stützstrukturen 220d, 220e, 220f, kann die Durchbiegung bzw. der Verzug mit der Dicke und Verteilung der Stützstrukturen korreliert werden. Die mittels der variierenden Muster-Fertigungskörper 200d, 200e, 200f erfasste Kenngröße K charakterisiert somit das Verhältnis der Stützstrukturgeometrie und Verteilung und des Verzugs.

## Patentansprüche

1. Additives Herstellungsverfahren, insbesondere pulverbettbasiertes selektives Laserstrahlschmelzen, zum Herstellen eines dreidimensionalen metallischen Bauteils aus mehreren Bauteilschichten, wobei das Bauteil als Teil eines Fertigungskörpers (100), umfassend einen Grundkörper (110), welcher das herzustellende Bauteil spezifiziert, und eine Stützstruktur (120) zum Stützen und Fixieren des Grundkörpers (110), hergestellt wird, mit den Schritten:
A) Definieren (A) einer dreidimensionalen Bauteilgeometrie des herzustellenden Bauteils,
B) Berechnen (B, 1210, 1220) mindestens eines ersten Herstellungsparameters f_{1...n}, der den Aufbauprozess des Grundkörpers (110) definiert und mindestens eines zweiten Herstellungsparameters h_{1...n}, der den Aufbauprozess der Stützstruktur (120) definiert, wobei ein Parametersatz P bereitgestellt wird (1500, 1600, 1700, 1800, 1900, 2000) und der Herstellungsparameter h_{1...n} als Funktion des Parametersatzes P, insbesondere mittels einer Finite-Elemente-Methode, berechnet wird,
C) Herstellen (C, 1310, 1320) des Fertigungskörpers (100) durch einen Aufbauprozess, umfassend mehrfaches Hinzufügen von Ausgangsmaterial und formgebendes Verfestigen, vorzugsweise durch jeweiliges selektives Schmelzen und/oder Sintern, des Ausgangsmaterials,
**dadurch gekennzeichnet, dass** der Parametersatz P mindestens einen Parameter p_{1...n} zur Charakterisierung der Stützstruktur (120) und/oder mindestens einen Parameter q_{1...n} zur Charakterisierung des Aufbauprozesses umfasst,
wobei der Parametersatz P als Funktion der Bauteilgeometrie, bzw. der Grundkörpergeometrie, und mindestens einer mechanischen und/oder eine geometrischen Kenngröße K₁, K₂ bereitgestellt wird,
welche an mindestens einem geometrisch vereinfachten und insbesondere standardisierten Muster-Fertigungskörper (200, 201, 202) erfasst wird.

2. Verfahren nach Anspruch 1,
**dadurch gekennzeichnet, dass** der Parameter p einen, mehrere oder sämtliche der folgenden umfasst:
- Dichteverteilung der Stützstruktur,
- Definition von Position und Größe von Perforationen in homogen verteilten Wandstrukturen der Stützstruktur,
- Lokale Verteilung von einzelnen Segmenten, welche in ihrer Gesamtheit die Strukturen definieren,
- Geometrische Ausbildung der intrinsischen Struktur, insbesondere einer inneren Gitterstruktur der Stützstrukturen,
- Zerlegung der Stützstrukturen in einen oder mehrere Freiformkörper,
- Lokale Steifigkeiten bezogen auf einzelne Raumpunkte oder Bereiche,
- Lokale Bruchdehnung bezogen auf einzelne Raumpunkte oder Bereiche,
- Lokale Zugfestigkeit bezogen auf einzelne Raumpunkte oder Bereiche,
- Position, Art und Größe der Grenzflächen zwischen Grundkörper und Stützstruktur, und
- Im Aufbauprozess auftretende Lasten zwischen Stützstrukturen und Grundkörper.

3. Verfahren nach Anspruch 1 oder 2,
**dadurch gekennzeichnet, dass** der Parameter q einen, mehrere oder sämtliche der folgenden umfasst:
- Bewegungsbahn eines oder mehrerer Strahlspots, vorzugsweise eines oder mehrerer Laserspots, in einem strahlungsbasierten additiven Herstellungsverfahren,
- Leistungsbezogene Eigenschaften der Strahlquelle, in einem strahlungsbasierten additiven Herstellungsverfahren,
- Ablenkgeschwindigkeit des Strahlspots in strahlungsbasierten Pulverbettverfahren,
- Parameter für den Drahtvorschub in drahtbasierten additiven Fertigkeitsverfahren,
- Parameter für den Pulvereintrag in pulverbasierten Laserauftragsschweißen
- Bewegungsbahn von Werkzeugen zum Materialauftrag, insbesondere im Pulverauftragsschweißen und in drahtbasierten additiven Herstellungsverfahren.

4. Verfahren nach einem der Ansprüche 1 bis 3,
**dadurch gekennzeichnet, dass** die Muster-Fertigungskörper (200) sich in einem, mehreren oder sämtlichen der folgenden unterscheiden:
- Dichteverteilung der Stützstruktur,
- Definition von Position und Größe von Perforationen in homogen verteilten Wandstrukturen der Stützstruktur,
- Lokale Verteilung von einzelnen Segmenten, welche in ihrer Gesamtheit die Strukturen definieren,
- Geometrische Ausbildung der intrinsischen Struktur, insbesondere einer inneren Gitterstruktur der Stützstrukturen,
- Geometrische Gestaltung der Stützstruktur,
- Verteilung und/oder Anordnung der Stützstruktur,
- Ausbildung der Grenzflächen zwischen Grundkörper und Stützstruktur.

5. Verfahren nach einem der vorstehenden Ansprüche,
**dadurch gekennzeichnet, dass** der mindestens eine Muster-Fertigungskörper (200) auf einer Bauplattform in einem Aufbauprozess hergestellt und mit der Bauplattform insbesondere stoffschlüssig verbunden wird, wobei die Erfassung der mechanische Kenngröße K₁ an der Bauplattform und dem mindestens einen mit der Bauplattform verbundenen Muster-Fertigungskörper (200) erfolgt.

6. Verfahren nach Anspruch 5,
**dadurch gekennzeichnet, dass** die Bauplattform mindestens einen Kraftsensor, insbesondere einen Druck- und/oder einen Zugsensor aufweist, welcher dazu eingerichtet ist, eine zwischen der Bauplattform und dem mit der Bauplattform verbundenen Muster-Fertigungskörper (200) wirkende Zug- und/oder Druckkraft zu erfassen.

7. Verfahren nach einem der vorstehenden Ansprüche,
**dadurch gekennzeichnet, dass** die mechanische Kenngröße K₁ eine Festigkeit und/oder eine Bruchdehnung ist, wobei die Kenngröße K₁ an mindestens einen Muster-Fertigungskörper (200) experimentell bestimmt wird.

8. Verfahren nach Anspruch 7,
**gekennzeichnet durch** die Berechnung einer thermisch induzierten Vorspannkraft, welche durch den Grundkörper (210) des Muster-Fertigungskörpers (200) auf die zugeordnete Stützstruktur (220) aufgebracht wird,
wobei der Aufbauprozess durch eine Simulation modelliert, insbesondere berechnet wird, und die thermisch induzierte Vorspannkraft aus der Simulation des Aufbauprozesses bestimmt wird (1540), oder
die thermisch induzierten Vorspannkraft als Funktion mindestens eines in einer Datenbank bereitgestellten Parameters und der Bauteilgeometrie des Muster-Fertigungskörpers (200) bereitgestellt wird (1860).

9. Verfahren nach Anspruch 8,
**dadurch gekennzeichnet, dass** der Muster-Fertigungskörper ein erster Muster-Fertigungskörper (201) ist, und
ferner ein zweiter Muster-Fertigungskörper (202) mit einer durch die Herstellungsparametern h1...n, welche als Funktion des Parametersatzes P berechnet werden, optimierten Stützstrukturgeometrie hergestellt wird,
wobei die Berechnung der thermisch induzierten Vorspannkraft aus der Simulation des Aufbauprozesses des zweiten Muster-Fertigungskörpers (202) erfolgt.

10. Verfahren nach einem der vorstehenden Ansprüche 1 bis 4,
**dadurch gekennzeichnet, dass** die geometrische Kenngröße K₂ ein Verzug und/oder eine Längenänderung und/oder ein Abstand ist und/oder eine Projektionsfläche ist, und durch Vermessung des mindestens einem Muster-Fertigungskörpers bestimmt wird.

11. Verfahren nach Anspruch 10,
**dadurch gekennzeichnet, dass** die mindestens eine Kenngröße K₂ ein, durch den Aufbauprozess des Muster-Fertigungskörpers (200), thermisch induzierter Verzug des Grundkörpers (210) und/oder der Stützstruktur (220) ist, oder eine Längenänderung des Muster-Fertigungskörpers (200) ist, welche durch das Aufbringen einer äußeren Last bis zum Bruch induziert wird, wobei die äußere Last eine, mehrere der folgenden umfasst:
- eine thermisch induzierte Vorspannkraft, welche im Aufbauprozess des Muster-Fertigungskörpers (200) durch den Grundkörper (210) auf die Stützstruktur (220) aufgebracht wird, und/oder
- eine äußere Last mit einem vordefinierten Kraftverlauf, welche auf den Muster-Fertigungskörper (200) aufgebracht wird.

12. Verfahren nach einem der Ansprüche 10 bis 11,
**dadurch gekennzeichnet, dass** die geometrische Kenngröße K₂ automatisiert durch optische Vermessung integrierter Messpunkte, insbesondere Vertiefungen oder Vorsprünge, auf der Oberfläche des Muster-Fertigungskörpers (200) bereitgestellt wird.

13. Verfahren nach einem der Ansprüche 1 bis 12,
**gekennzeichnet durch** eine Hebeleinheit (13), welche dazu eingerichtet ist, eine äußere Last auf den Muster-Fertigungskörper (200") aufzubringen, wobei die Kenngröße K₂ als Funktion eines Hebelarms (15) und/oder der äußeren Last bereitgestellt wird.

14. Verfahren nach einem der Ansprüche 1 bis 13,
**gekennzeichnet durch**
- das Bereitstellen eines werkstoffspezifischen Kennfeldes W, in dem mindestens ein mechanischer Kennwert W_{1,...n} zur Charakterisierung des Ausgangsmaterials hinterlegt ist, wobei der Parametersatze P als Funktion der mindestens einen Kenngröße K, der Geometrie des Bauteils, insbesondere des Grundkörpers (110) und des mindestens ein mechanischen Kennwertes W_{1,...n} berechnet wird, oder
- das Bereitstellen (1640) eines prozessspezifischen Kennfeldes A, in dem mindestens ein Prozessparameter A_{1,..n} zur Charakterisierung des Aufbauprozesses hinterlegt ist, wobei der Parametersatze P als Funktion der mindestens einen Kenngröße K, der Geometrie des Bauteils, insbesondere des Grundkörpers (110) und des mindestens ein mechanischen Kennwertes W_{1,...n} berechnet wird,
wobei das prozessspezifische Kennfeld die Kennwerte A_{1...n} einen, mehrere oder sämtliche der folgenden umfassen:
- Laserleistung,
- Spot-Geschwindigkeit,
- Schutzgasatmosphäre,
- Vor-Temperierung und Geometrie der Basisplatte,
- Schichtdicke des hinzugefügten Ausgangsmaterials.

15. Verfahren zur Bereitstellung mindestens eines Herstellungsparameters h_{1...n}, für Additives Herstellungsverfahren, insbesondere ein pulverbettbasiertes selektives Laserstrahlschmelzen, vorzugsweise nach einem der Ansprüche 1 bis 15, zum Herstellen eines dreidimensionalen metallischen Bauteils aus mehreren Bauteilschichten,
wobei das Bauteil als Teil eines Fertigungskörpers (100), umfassend einen Grundkörper (110), welcher das herzustellende Bauteil spezifiziert, und eine Stützstruktur (120) zum Stützen und Fixieren des Grundkörpers (110), hergestellt wird,
wobei ein Herstellungsparameter h_{1...n} den Aufbauprozess der Stützstruktur (110) definiert und als Funktion des Parametersatzes P, insbesondere mittels einer Finite-Elemente-Methode, berechnet wird,
**dadurch gekennzeichnet, dass** der Parametersatz P mindestens einen Parameter p zur Charakterisierung der Stützstruktur (120) umfasst und als Funktion der Geometrie des Bauteils, insbesondere des Grundkörpers (100) und mindestens einer Kenngröße K₁, K₂ bereitgestellt wird,
wobei die Kenngröße eine mechanische K₁ und/oder eine geometrische Kenngröße K₂ ist, welche an mindestens einem, vorzugsweise geometrisch vereinfachten und insbesondere standardisierten, Muster-Fertigungskörper (200, 200a, 200b) erfasst wird.
